# EUROPEAN PATENT APPLICATION

(11) **EP 1 471 037 A1**
(43) Date of publication of application: **27.10.2004**
(21) Application number: 04252369.6
(22) Date of filing: 22.04.2004
(51) Int. Cl.: C02F 3/02

(54) **A set of parts to provide a sewage treatment plant**

(30) Priority: 22.04.2003 GB 0309120
(71) Applicant: Clearwater Polcon, Ltd., Bridgewater, Somerset TA6 4AW (GB)
(72) Inventor: Boyer, Stephen Marsh, Bridgewater, Somerset TA6 4AW (GB)
(74) Representative: Johnson, Terence Leslie

(57) **Abstract**

Referring to the drawings, there is shown a set of parts 100 assemblable to provide a sewage treatment plant 101, comprising a top 1, a base 2, support means in the form of stabilising or support feet 3, and a plurality of separate devices 4-8 defining discrete internal areas of the assembled plant 101, the arrangement being such that the parts 100 are assemblable to provide a sewage treatment plant 101 when adjacent surfaces of respective parts are secured together by securing means.

There may be a submersible pump and venturi or air blower and diffuser, which pump, venturi or blower and diffuser may be powered by alternative energy, such as solar, wind or tidal power.

The plant can thus be run in remote locations, such as isolated communities or in developing countries.

## Description

The invention relates to a set of parts, particularly to a set of parts assemblable to provide a sewage or waste water treatment plant, hereinafter a sewage treatment plant, to such an assembled plant, and to a method of making same.

Sewage treatment plants are known, particularly ones having a submerged aerated media package or population for providing sewage treatment. Such plants are generally efficient, have relatively low operating costs, have a high effluent standard and a relatively trouble-free operation. They are often installed below ground.

Such plants are however bulky, and are thus generally expensive to store and/or transport.

It is an object of the invention to seek to mitigate this disadvantage.

According to a first aspect of the invention there is provided a set of parts assemblable to provide a sewage treatment plant, comprising a base, a top, support means, and a plurality of separate devices defining discrete internal areas of the assembled plant, the arrangement being such that the parts are assemblable to provide a sewage treatment plant when adjacent surfaces of respective parts are secured together by securing means.

Using the invention it is possible to store and/or transport the set for assembly where *desired in situ* without using mechanical fixing devices. The securing means may comprise a non-mechanical securing means. This provides for ease of assembly in say a remote area, particularly where said securing means may comprise an adhesive.

The base may comprise mountings for the support means which may be external and may comprise support or stablilising feet.

The plurality of discrete devices may comprise baffles, which may comprise a primary baffle, a humus baffle, a primary scum baffle and a humus scum baffle, the primary baffle and primary scum baffle being securable together, and the humus baffle and humus scum baffle being securable together. This provides for a modular construction.

The top may comprise an access means for accessing the interior of the assembled parts. This provides for ease of entry during assembly particularly when the access means may comprise an access aperture or manhole and a removable cover plate therefor.

There may suitably be a media bed providing a population of microorganisms in the assembled sewage treatment plant. This provides for efficient sewage treatment.

There may be a submersible pump and venturi device or alternatively an air blower and diffuser device. These provide for necessary air for the media population.

According to a second aspect of the invention there is provided a sewage treatment plant assembled from a set as hereinbefore described.

The submersible pump and/or air blower of the plant may be adapted to be driven by mains electrical power, solar power, wind or wave power. These latter provide for assembly and operation in remote locations.

There may be solar panels to provide solar power and/or wind driven means to provide wind power.

The major component may comprise plastic.

The plastic components may be made by resin transfer moulding. This produces a plant that is strong yet light.

According to a third aspect of the invention there is provided a method of assembly of a plant as hereinbefore described from a set of parts also as hereinbefore described, comprising securing major parts of the set together using an adhesive at a desired location to which the set has first been transported in assembled form.

The adhesive may comprise a cold cure adhesive.

A set of parts for assembly to provide a sewage treatment plant, and a plant assembled therefrom, are hereinafter described, by way of example, with reference to the accompanying drawings.
Fig. 1 is an exploded schematic view of a set of parts according to the invention;
Fig. 2 is a side view of an assembled set of parts of Fig. 1 to provide a sewage treatment plant, showing additional features;
Fig. 3 is a top plan view of the plant of Fig. 2; and

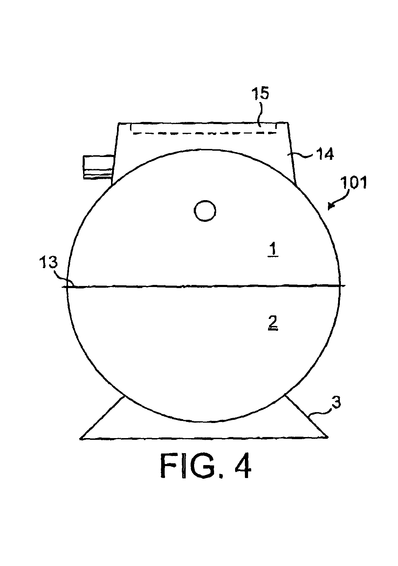

Fig. 4 is an end elevational view of the plant of Fig. 2.

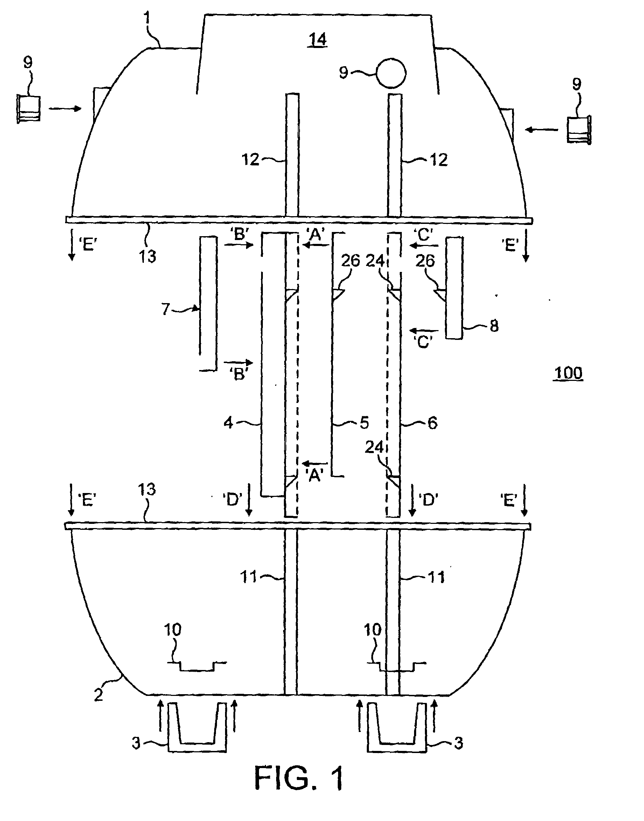

Referring to the drawings there is shown in Fig. 1 a set of parts 100 assemblable to provide a sewage treatment plant 101, comprising a top 1, a base 2, support means in the form of stabilising or support feet 3, and a plurality of separate devices 4-8 defining discrete internal areas of the assembled plant 101, the arrangement being such that the parts 100 are assemblable to provide a sewage treatment plant 101 when adjacent surfaces of respective parts are secured together by securing means.

The separate devices 4-8 comprise in the embodiment a primary baffle 4, closure plate 5, humus baffle 6, primary scum baffle 7, and humus scum baffle 8. There is also a socket 9 providing an inlet, suitably a 110mm diameter socket. There are mounting points or locations 10 on the base 2 for the stabilising feet 3, and internal seatings 11,12 for the baffles 4-8. As shown in Fig. 1, the closure plate 5 is secured to one side of the primary baffle 4 by offering up in the direction of arrows 'A' . The primary scum baffle 7 is secured to the opposite side of the primary baffle 4 by offering up in the direction of arrow 'B'. Likewise the humus scum baffle 8 is secured to the humus baffle 6 by offering it up in the direction of arrows 'C' .

The assembled baffles are mounted in the seatings 11 in the base 2 in the direction of arrows 'D', and the top 1 is assembled to the base 2 by offering it up thereto in the direction of the arrows 'E', the baffle assemblies being received in the seatings 12 in the top 1. There are flanges 13 on the top and base which engage, forming a central seam location.

There is an access means 14 in the form of an aperture, manway or manhole in the top 1, which is obturated by a removable cover plate 15, the baffle assemblies 4-8 providing in the assembled plant 101 a primary or inlet zone 16, a media or biozone 17 and a humus or outlet zone 18. There is an inlet pipe assembly 19 leading from the socket 9 to the primary zone 16 and an outlet 20 from the humus zone 18.

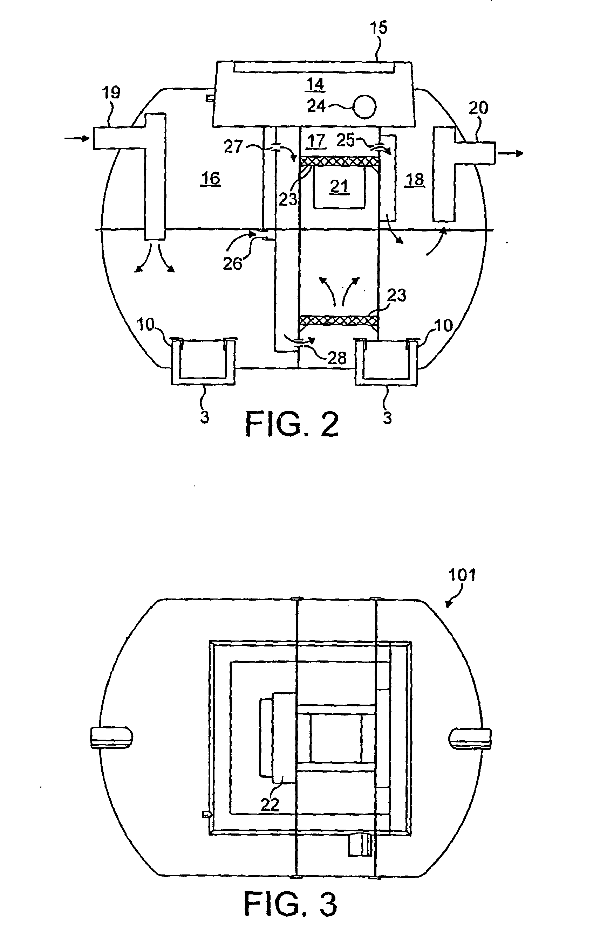

There is a submersible pump 21 in the media zone 17 and a venturi or distribution housing 22 in the primary zone 16. The media or bio-population is housed on grids in the form of spaced media retaining grids 23, Fig. 2, supported on brackets 24.

All the major parts of the set 100 are formed from resin transfer moulded plastic and are assembled by securing contacting surfaces together using an adhesive, suitably a cold cure adhesive.

The plant 101 includes in addition to the inlet vent or pipe assembly 19 and outlet pipe assembly 20, a vent socket 24 and in addition, not shown, electrical plugs/cable glands, locks, keys etc. The pump is submersible, and may be replaced by an air blower in which case a diffuser would replace the venturi.

In use, sewage to be treated in the plant enters via inlet 19 and passes in a serpentine path sequentially through the zones 16,17 and 18, being treated in the biozone by the biomass on the grids to remove waste material and exiting from the humus zone, the humus baffle retaining solids.

A method of assembly of a set of parts embodying the invention is explained in the following non-limiting, exemplary, example:
1.1 Wipe down all surfaces to be secured with adhesive, i.e. to be glued, with a cloth or rag soaked in a solvent such as acetone.
1.2 Glue the feet 3 to the base 2 using an adhesive such as Flexus MA422 adhesive. At the same time, glue the closure 5 to the venturi baffle 4 whilst in a horizontal position. The baffle should not be in the base 2 yet.
1.3 Glue the humus scum baffles 8 (there are two as shown, Fig. 3) and primary scum baffle 7 into position whilst in a horizontal position.
1.4 Apply the glue and ensure that an even adequate bead of glue is used on every surface to be joined together, or jointed, using the adhesive.
1.5 When cured sufficiently to handle after approximately one hour, glue the baffles 4-8 into the correct position in the base 7. The venturi baffle should always be facing towards the large end of the base (primary end).
1.6 Observe that adequate squeeze through of the adhesive has been achieved. If not, apply more adhesive as appropriate.
1.7 Leave for another hour to cure until sufficiently cured to handle. Glue the top 1 into position. Apply an even bead of glue onto the face flange and curved part only of the baffles. Apply glue to the bottom 150mm of the baffle location 12 on the inside to compensate for any lost on the baffle during positioning.
1.8 Lower the top 1 onto the base 2 ensuring that the baffles 4-8 locate in the respective recess 12. Apply clamps (not shown) to the centre seam 13 and ensure that glue squeeze through is achieved.
1.9 Remove the clamps when the glue has cured sufficiently to do so (approximately 1hr).
2.0 Use templates (not shown) provided to cut the inlet/outlet vent holes 19,20,24 and then wipe the face clean with the cloth or rag soaked in acetone. Glue the sockets 19,20 into position.
2.1 When the fittings have cured sufficiently, water test the shell to ensure the water tightness of all bonds.
2.2 Water test
   (a) fill the media chamber 17 to just below the height of a weir 25. If no leaks are observed, fill the primary chamber 76 and then the humus chamber 18
   (b) Empty the chambers in the following order (i) Humus (ii) Primary (iii) Media
   (c) If any leak is observed, pump the water out, label the tank as quarantine and return the tank to the production area for remedial work.
2.3 Once the water test has been passed, return the tank to the production area.
2.4 Assemble the inlet 19 and outlet dip pipes 20 and glue into position in the tank using PVC solvent adhesive.
2.5 Fit the lower media floor 23. Fill the media bed with the specified media. Fit the top floor 23 and pump box 21. Fit the pump box using suitable fixing means such as 4No. stainless steel pop rivets.
2.6 Fit the venturis 22 using brackets provided and then the plug and socket arrangement using 6mm stainless steel bolts to the access shaft.
2.7 Glue the I.D. plate into the access shaft approximately 100mm from the top.
2.8 Stick the following labels into position:
   1No. Inlet
   1No. Outlet
   1No. Vent
   2No. Bio-Clear
   1No. Inspection
2.9 Fit lid 15 and lock into position. Manhole keys and cable glands are provided supplied separately.

It will be understood that in use, the serpentine flow through the plant is provided by vertically spaced (in use) inlet and outlet 26,27 to the primary scum baffle 7 leading to the venturi and thence from the lower outlet thereof to the media zone 17 through an outlet 28, the sewage being treated then passing from the media zone 17 over the weir 25 and thence into the humus zone 18 via the humus scum baffle 8 before exiting the plant at 20.

By using alternative energy such as solar, wind or tidal power for the submersible pump and venturi or the alternative air blower and diffuser, the plant can be run in remote locations, for example in isolated communities or in developing countries. Moreover, by providing the plant as a set of parts, the plant is relatively easily assembled in say a remote location, and can also be readily stored and/or transported. Indeed, by being provided as a set of parts in kit form, savings in transport costs are achieved as a greater number of sets can be transported for a given cost. Moreover the stabilising feet 3 have a shape which holds the plant in position when being installed, preventing damage and aiding installation. A sling can be passed through the feet when lifting the plant into an excavation.

It will be understood that modifications may be possible. Thus the primary zone 16 may be a separate structure. In all embodiments, the heavier solids will sink to the bottom of the tank and the lighter material will produce a 'scum' at the surface. Both will be retained, allowing settled liquor to pass forward to the next stage of treatment by displacement.

Biological oxidation is the term used to describe the process in which naturally occurring microorganisms, which colonise the filter bed, utilise the organic material present in the settled effluent as a food source, to reduce the biochemical oxygen demand (800) prior to discharge. In order to achieve this microorganisms themselves require an adequate supply of oxygen, which is supplied by the venturi/pump combination that both entrains oxygen and distributes the liquor through the filter.

Final settlement is provided by an integral humus tank. The purpose of this is to settle out biomass, which is continually being replaced by new growth. The fully treated final effluent is suitable for discharge into a watercourse, river or soakaway if a consent to discharge has been granted. On all but the smallest plants secondary sludge is automatically returned to the primary settlement tank, to maintain efficiency and reduce de-sludging requirements.

The plant has two biological media trays. Humus for the humus zone is recirculated back to the zone 16.

## Claims

1. A set of parts assemblable to provide a sewage treatment plant, **characterised by** a base, a top, support means, and a plurality of separate devices defining discrete internal areas of the assembled plant, and by the arrangement being such that the parts are assemblable to provide a sewage treatment plant when adjacent surfaces of respective parts are secured together by securing means.

2. A set according to claim 1, **characterised by** the securing means comprising a non-mechanical securing means.

3. A set according to claim 2, **characterised by** the securing means comprising an adhesive.

4. A set according to claim 3, **characterised by** the adhesive comprising a sold-cure adhesive.

5. A set according to any preceding claim, **characterised by** the base comprising mountings for the support means which are external and comprise support or stabilising feet.

6. A set according to any preceding claim, **characterised by** the plurality of discrete devices comprising baffles.

7. A set according to claim 6, **characterised by** the baffles comprising a primary baffle, a humus baffle, a primary scum baffle and a humus scum baffle, by the primary baffle and primary scum baffle being securable together, and by the humus baffle and humus scum baffle being securable together.

8. A set according to any preceding claim, **characterised by** the top comprising an access means for accessing the interior of the assembled parts.

9. A set according to claim 8, **characterised by** the access means comprising an access aperture or manhole and a removable cover plate therefor.

10. A set according to any preceding claim , **characterised by** including a media bed providing a population of microorganisms on the assembled sewage treatment plant.

11. A set according to any preceding claims, **characterised by** comprising a submersible pump and venturi device.

12. A set according to any one of claims 1 to 10, **characterised by** comprising an air blower and diffuser device.

13. A sewage treatment plant, **characterised by** being assembled from a set according to any preceding claim.

14. A plant according to claim 13, **characterised by** the submersible pump and/or air blower being adapted to be driven by mains electrical power, or by alternative energy power.

15. A plant according to claim 14, **characterised by** the alternative energy power comprising solar, wind, or wave power.

16. A plant according to claim 15, **characterised by** solar panels to provide solar power.

17. A plant according to claim 15, **characterised by** including wind driven means to provide wind power.

18. A plant according to any of claims 13 to 17, **characterised by** the major components comprising plastic.

19. A plant according to claim 16, **characterised by** the plastic components being made by resin transfer moulding.

20. A method of assembly of a plant according to any of claims 13 to 19 from a set of parts according to any of claims 1 to 12, **characterised by** comprising securing major parts of the set together using an adhesive at a desired location to which the set has first been transported in an assembled form.

21. A method according to claim 20, **characterised by** the adhesive comprising a cold cure adhesive.
